# EUROPEAN PATENT SPECIFICATION

(11) **EP 4 167 715 B1**
(45) Date of publication and mention of the grant of the patent: **01.04.2026**
(21) Application number: 21765738.6
(22) Date of filing: 21.06.2021
(51) Int. Cl.: A01D 57/04, F16C 11/04

(54) **TRUNNION-MOUNTED ACTUATOR ASSEMBLY**
ZAPFENMONTIERTE AKTUATORANORDNUNG
ENSEMBLE ACTIONNEUR MONTÉ SUR TOURILLON

(30) Priority: 19.06.2020 US 202063041390 P
(43) Date of publication of application: 26.04.2023
(73) Proprietor: CNH Industrial Belgium NV, 8210 Zedelgem (BE)
(72) Inventor: TROWBRIDGE, Jeffrey C., Stevens, Pennsylvania 17578 (US)
(74) Representative: CNH Industrial IP Department
(86) International application number: PCT/US2021/038301
(87) International publication number: WO 2021/258067

(56) References cited:
- EP-A1- 2 436 844
- FR-A1- 2 821 897
- GB-A- 1 366 523
- US-A- 3 897 833
- US-A- 4 368 609

## Description

### BACKGROUND OF THE INVENTION

Agricultural harvester heads (also known as "headers") are used to remove crop material from the ground and convey such material into the harvester for further processing. For example, a harvester head might include a cutter bar assembly to sever the crop stalks, and one or more conveyors such as augers or belts to consolidate the crop material at the center of the header. The header also may include one or more harvesting reels, such as pickup reels, draper reels and gathering reels, to help guide the crop into the header.

In many cases, various operating parts of the header are movably mounted to the header frame, to allow the operator to adjust or fine-tune to the header's operation in particular crop conditions. For example, cutter bars and reels are often movable, and in some cases movable together, to adjust harvesting performance. A typical header reel is mounted to the header between support arms, and includes a rotating shaft to which tine rods or bars are attached to sweep crop material backwards over the cutter bar assembly and towards the back of the header. The reel is movably mounted to the header by manipulating the support arms, which may be done using a variety of different mechanisms, such as hydraulic, electric or pneumatic motors.

Hydraulic piston and cylinder actuators are typically used to control the reel position. Examples of such systems are shown in U.S. Patent Application No. 14/420,658 (U.S. Publication 2015/0216123), U.S. Patent Application No. 15/610,836 (U.S. Publication 2018/0343800), and U.S. Patent Application No. 15/285,982 (U.S. Publication 2018/0092305). The selection and design of actuators and hydraulic power systems suitable for controlling the position of the reel requires consideration of the operating parameters of the actuator (e.g., maximum load, stroke length, etc.), as well as consideration of how to package the actuators into the header assembly. In some cases, an hydraulic actuator may be mounted to the header frame and reel arm using clevis mounts at the ends of the actuator-i.e., at the cap at the cylinder end, and at the end of the rod at the piston end. In other cases, the cylinder may be mounted to the frame by a trunnion mount located somewhere between the cylinder's end cap and the piston opening. Such trunnion mounts are useful, for example, to increase bucking resistance or to fit the cylinder to pre-existing or desired structural mounting locations. Both of these benefits are due to the fact that the entire length of the actuator does not have to fit in the space between the frame mounting location and the reel arm mounting location. The inventor has determined that existing trunnion-mounted actuator cylinders can be improved. US4368609A describes a combine harvester header with a hydraulic cylinder controlling reel height. The cylinder rod sub-assembly has a threaded segment which allows rotational adjustment of the cylinder rod fine-tuning the reel's position relative to the cutterbar. A dual-purpose member on the cylinder rod enables these adjustments, and acts as a safety stop when it is lowered to prevent inadvertent lowering of the reel from its fully raised position.

This description of the background is provided to assist with an understanding of the following explanations of exemplary embodiments, and is not an admission that any or all of this background information is necessarily prior art.

### SUMMARY OF THE INVENTION

The present invention provides an agricultural vehicle header as defined by appended claim 1. Preferred aspects of the invention are defined by the dependent claims.

### BRIEF DESCRIPTION OF THE DRAWINGS

Embodiments of inventions will now be described, strictly by way of example, with reference to the accompanying drawings, in which:
FIG. 1 is a side elevation view of an agricultural vehicle that may include embodiments of the present invention.
FIG. 2 is an enlarged view of the header shown in FIG. 1.
FIG. 3 is illustrates an example of an actuator body mounted to a frame by trunnion connections.
FIG. 4 is a partial exploded view of the embodiment of FIG. 3.
FIG. 5 is an exploded plan view of the actuator body and trunnion connections of FIG. 3.
FIG. 6 is a cross-sectional view of a trunnion connection as viewed along the trunnion pivot axis.
FIG. 7 is a cross-sectional view of another example of a trunnion connection as viewed along the trunnion pivot axis.
FIG. 8 is another example of an actuator body mounted to a frame by trunnion connections.

In the figures, like reference numerals refer to the same or similar elements.

### DETAILED DESCRIPTION OF THE DRAWINGS

The drawing figures depict one or more implementations in accordance with the present concepts, by way of example only, not by way of limitations.

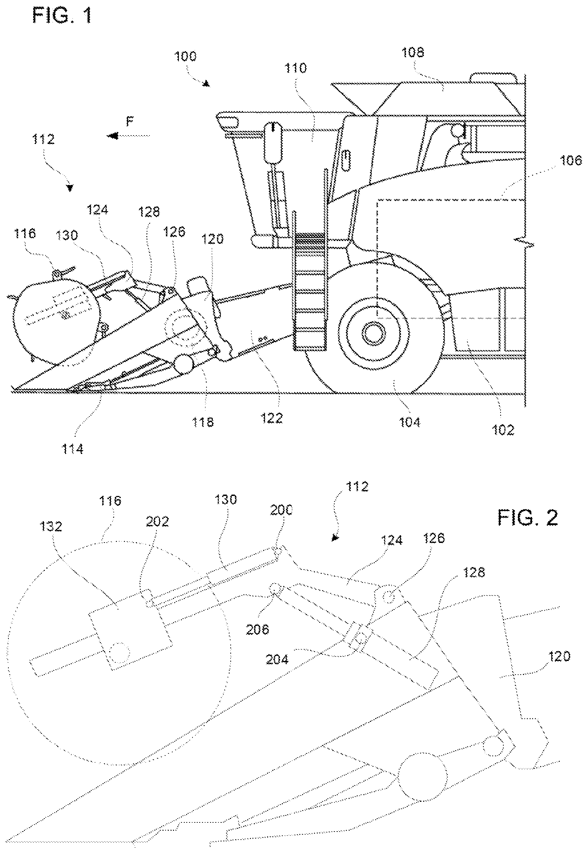

FIGs. 1 and 2 illustrate an example of an agricultural combine 100 with which embodiments of the invention may be used. The combine 100 includes a chassis 102 that is configured for driving on a surface (e.g., the ground or a road), such as by being supported by pneumatic wheels 104, tracked wheel assemblies, or the like. The combine 100 includes a threshing and separating system 106 mounted on or within the chassis 102. The threshing and separating system 106 may include mechanisms such as one or more threshers (e.g., an axial flow thresher), sieves, blowers, and the like, as well as an associated grain hopper 108 and unloader. Threshing and separating systems 106 and their associated components are well-known in the art, and need not be described in detail herein. The combine 100 also may include other features, such as an operator cab 110, and so on.

A header 112 is attached to the chassis 102, typically at the forward end of the combine 100. The header 112 is configured to cut and harvest crop material from the ground as the combine 100 drives in the forward direction F. The header 112 may include one or more cutter bars 114 located at or near the leading edge of the header 112 to cut crops at or near the ground level, and one or more reels 116 configured to pull the crop material backwards towards the header 112. The header 112 also may include crop conveyors 118 that are configured to move the crop material at the lateral ends of the header 112 towards the center of the header 112. The crop conveyors 118 may be in the form of belts, auger screws (as shown), or the like. At the center, the header 112 may include a feeder conveyor (not shown) that conveys the crop material backwards towards a crop outlet. The header 112 also may include supports in the form of gauge wheels or skids to control the height of the header 112 over the ground.

The header 112 is built on a frame 120, which is attached to the chassis 102 by a feeder housing 122. The feeder housing 122 is configured to convey crop material backwards from the crop outlet of the header 112 to the threshing and separating system 106. The feeder housing 122 may be movable by one or more actuators (not shown) to change the position of the header 112 relative to the ground.

Each reel 116 is mounted to the frame 120 by support arms 124 located at each end of the reel 116. The reels 116 are rotatably mounted relative to the support arms 124, such that the reels 116 can rotate to drive crop material into the header 112. Such rotating mount connection between the reels 116 and support arms 124 may be by conventional bearings or the like, as known in the art. One or more motors (not shown), such as electric or hydraulic motors, or a power take-off from the vehicle's main power plant, may be provided to drive the reels 116. The particular structure of the reels 116 and their rotational drive system are not relevant to the invention, and need not be described in more detail herein.

The support arms 124 are movable to allow the reel 116 to be repositioned to account for crop conditions or the like. For example, each support arm 124 may be connected to the frame 120 by movable joints, such as pivot connectors 126. One or more actuators may be provided to move each reel 116. In the shown example, each support arm 124 has an associated first actuator 128 and an associated second actuator 130.

The first actuators 128 are configured to adjust the reel position generally in the vertical direction, and the second actuators 130 are configured to adjust the reel position generally in the fore-aft direction. In particular, each first actuator 128 is connected between the frame 120 and the respective support arms 124, and operable to rotate the support arm 124 about the pivot connection 126. Thus, the reel 116 is moved in an arcuate path that is generally in the vertical direction. The second actuators 130 are connected between the support arm 124 and a reel mount 132 that supports the end of the reel 116 on the support arm 124. The reel mount 132 is slidable along the support arm, such as by being mounted on a linear bearing surface. Thus, operation of the second actuator 130 moves the reel mount 132 and the reel 116 generally in the fore-aft direction.

In other examples, the support arms 124 may comprise other linkage geometries, such as a four-bar linkage or the like. Furthermore, other configurations of actuators may be provided. For example, the first actuators 128 may be omitted, or the second actuators 130 may be omitted, or different configurations of actuators may be used. Thus, the travel path and range of motion of the reel 116 may have any number of different geometries and controls.

The reel actuators 128, 130 are operated by a control system comprising one or more electrical or hydraulic power supplies, actuators, switches or the like, as known in the art. The details of the control system are not relevant to the present invention, and need not be described in detail herein.

Each first actuator 128 and second actuator 130 may comprise any suitable mechanism for providing the desired motion. While rotating actuators and geared actuators may be used in some cases, typical headers use linear actuators such as a hydraulic piston and cylinder arrangement (i.e., a hydraulic actuator), a pneumatic piston and cylinder arrangement (i.e., a pneumatic actuator), an electric actuator (e.g., an electrically operated lead screw-driven actuator), or the like. Such linear actuators typically are mounted to the associated components (frame 120, support arms 124, reel mount 132, etc.) by a first connection at the driving element (e.g., the hydraulic cylinder for a hydraulic actuator or the motor body for an electric actuator), and a second connection at the driven element (e.g., the hydraulic piston for a hydraulic actuator or the telescoping rod for an electric actuator).

In some cases, one or both connections may be provided by a rigid joint, such as by bolting the driving element or driven element rigidly to the associated component, but such rigid connections do not allow relative movement between the actuator element and the associated component. More typically, however, the connection is made using a clevis joint or a trunnion joint.

A clevis joint is a pinned joint located at the distal end of the actuator element (i.e., the end that is remote from the other actuator element). A clevis joint is located on the axis defined by the travel path of the driven element, so that reaction loads on the clevis joint do not generate bending loads. However, the clevis joint is located beyond the driven element's range of motion. A clevis joint allows relative rotation between the actuator element and the associated component about one or more planes. For example, the end the actuator element may have a cylindrical hole that is secured to the associated component by a pin that passes through the hole. A cylindrical bushing or bearing may be provided at the clevis joint to reduce friction, and additional degrees of freedom may be provided by using a spherical bearing at the clevis joint. As noted above, a clevis joint is located outside the travel path of the driven element of the actuator. Thus, the body of the pin can intersect the travel path of the driven element, thereby providing direct load transfer between the actuator element and the associated component. In the example of FIG. 2, the second actuator 130 has a first clevis joint 200 connecting the drive element (hydraulic cylinder) of the second actuator 130 to the support arm 124, and a second clevis joint 202 connecting the driven element (piston) of the second actuator 130 to the reel mount 132.

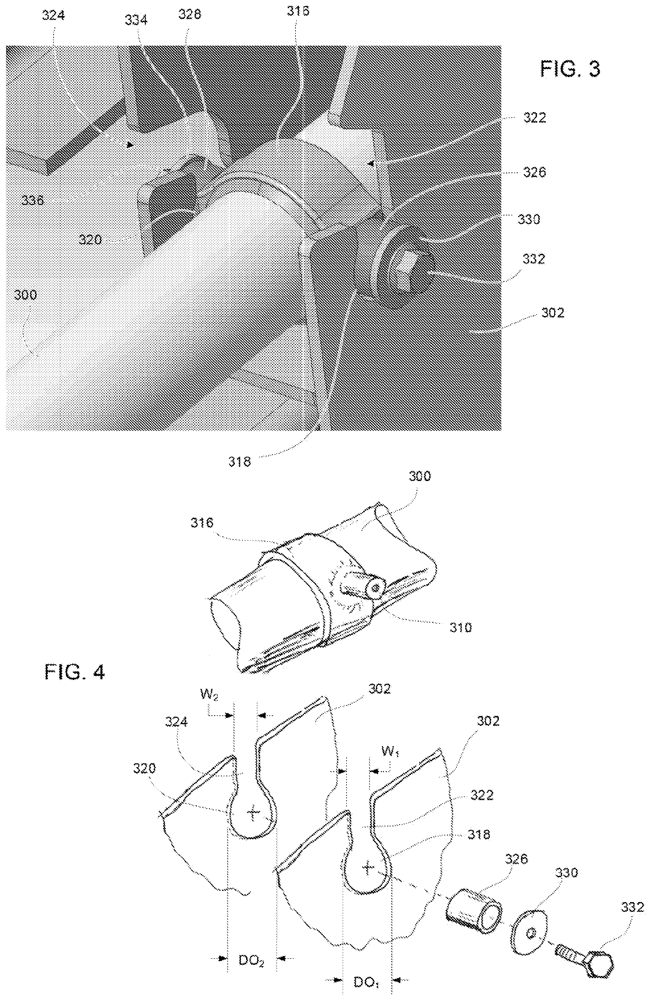

A trunnion joint is a pivot joint provided along the length of the actuator element, and within the travel path of the driven element. A typical trunnion joint comprises two cylindrical posts ("trunnions") that extend from the sides of the driving element body, such as the outer cylindrical body of a hydraulic actuator. Locating the trunnion joint here, rather than using a clevis joint at the distal end of the actuator element, allows the actuator to be more compact, facilitates closer positioning of the connections between the actuator and the two associated components, and provides greater resistance to buckling loads for a given travel stroke, due to the fact that the load path between the actuator connections is shorter. In the example of FIG. 3, the first actuator 128 has a trunnion joint 204 connecting the drive element (hydraulic cylinder) of the first actuator 128 to the frame 120, and a third clevis joint 206 connecting the driven element (piston) of the first actuator 128 to the support arm 124.

In other embodiments, the first clevis joint 200 may be replaced by a trunnion joint, or the first trunnion joint 204 may be replaced by a clevis joint. Other alternatives and variations will be apparent to persons of ordinary skill in the art in view of the present disclosure. In any event, at least one trunnion joint is provided to hold at least one of the actuators 128, 130 to the associated component.

While trunnion joints can provide some benefits, they require a more complex mounting arrangement than a clevis joint. In particular, it is impossible to use a single pin to form the trunnion joint because the pivot axis of the trunnion passes through the travel path of the driven element, and, in the case of hydraulic and pneumatic actuators, through the body of the actuator itself. Thus, a typical trunnion joint uses a separate pillow block bearing to separately hold each trunnion. An example of such as structure is shown in U.S. Pat. No. 3,897,833. Such pillow blocks require additional fastener to hold the pillow block in place, which adds weight and cost to the assembly. Such fasteners also become part of the load-bearing path of the connection between the actuator and the associated component, requiring increased attention to proper designing of the parts to bear the expected operation loads.

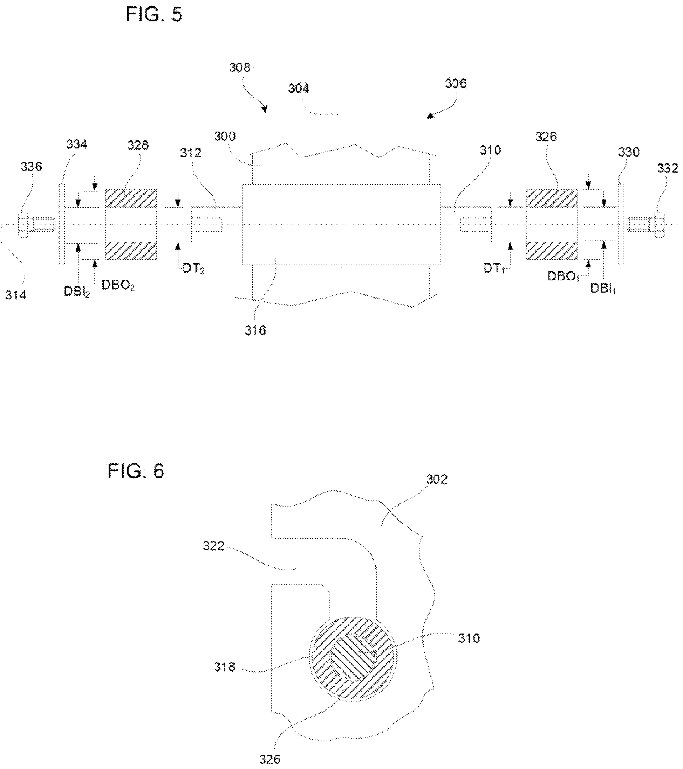

It has been determined that a trunnion connection between a reel actuator (or other types of actuator) and the associated component can be improved. A first example of an improved trunnion connection is illustrated in FIGs. 3-6, which show various views of a trunnion-mounted actuator assembly. The assembly connects an actuator body 300 to a frame 302. The actuator body 300 is, in this example, the hydraulic cylinder of a hydraulic actuator. The frame 302 may comprise a header frame 120, part of a support arm 124, or any other part of a component that serves as a mounting point an actuator element.

The actuator body 300 extends along a longitudinal direction 304, which is defined by the operating direction of the actuator (e.g., the stroke direction of the piston). The actuator body 300 has a first lateral side 306 and a second lateral side 308, the second lateral side 308 being opposite the first lateral side 306 with respect to the longitudinal direction 304. A first trunnion 310 extends from the first lateral side 306 of the actuator body 300, and a second trunnion 312 extends from the second lateral side 308 of the actuator body 300. The first and second trunnions 310, 312 both extend perpendicular to the longitudinal direction 304, and they are arranged collinearly with each. Thus, the first and second trunnions 310, 312 form a single pivot axis 314. The first and second trunnions 310, 312 may be connected to the actuator body 300 by any suitable mechanism. For example, the trunnions may be provided on a cylindrical collar 316 that is heat shrunk or welded to the actuator body 300, or they may be welded directly to the actuator body 300.

The frame 302 has a first opening 318 that is positioned and sized to receive the first trunnion 310, and a second opening 320 that is positioned and sized to receive the second trunnion 312. slot To this end, the first and second openings 318, 320 are spaced apart by a lateral distance L, and the first and second openings 318, 320 are larger, as measured in a plane perpendicular to the pivot axis 314, than at least portions of the first and second trunnions 310, 312 that are spaced apart by the same lateral distance L. For example, in the shown embodiment, the first trunnion 310 has a first trunnion diameter DT1 and the first opening 318 has a first opening diameter DO1 that is larger than the first trunnion diameter DT1, and the second trunnion 312 has a second trunnion diameter DT2 and the second opening 320 has a second opening diameter DO2 that is larger than the second trunnion diameter DT2. The term "diameter" is used to broadly encompass the size of an trunnion or opening having any shape, with an opening having a respectively "larger" diameter being sized to allow at least some degree of rotation about the pivot axis 314 of a trunnion having a respectively smaller diameter. The first and second openings 318, 320 may be semicircular and the first and second trunnions 310, 312 may be circular in profile, such as shown in FIGs. 3 through 6, but it will be understood that neither the trunnions nor the openings are required to be perfectly in profile, as will be clear from the example provided below. It will also be understood that the first and second trunnions 310, 312 may not have a uniform shape along their lengths. For example, one or both of the first and second trunnions 310, 312 may have a tapered shape, a stepped shape, or other variations in cross-sectional shape along the pivot axis 314.

The first and second trunnions 310, 312 optionally may have identical diameters and shapes. Similarly, the first and second openings 318, 320 optionally may have identical diameters and shapes. Such a configuration might allow the actuator body 300 to be installed with either trunnion in either opening. However, this feature is not required in all embodiments.

The frame 302 also includes a first slot 322 that extends from outside the frame 302 to the first opening 318, and a second slot 324 that extends from outside the frame 302 to the second opening 320. The first slot 322 has a first slot width W1, which is the minimum width of the first slot 322 in a plane perpendicular to the pivot axis 314. Similarly, the second slot 324 has a second slot width W2, which is the minimum width of the second slot 324 in a plane perpendicular to the pivot axis 314. The first slot width W1 is greater than the first trunnion diameter DT1, and the second slot width W2 is greater than the second trunnion diameter DT2. Thus, the first trunnion 310 can move along the first slot 322 from a position outside the frame 302 to the first opening 318, and the second trunnion 312 can move along the second slot 324 from a position outside the frame 302 to the second opening 320. The first slot 322 and second slot 324 may have identical shapes (e.g., straight, curved, etc.), or they may be dissimilar. However, it is preferred that the first slot 322 and the second slot 324 are shaped to facilitate simultaneous movement of the first and second trunnions 310, 312 into the first and second openings 318, 320, respectively.

A first bearing 326 is interposed between the first opening 318 and the first trunnion 310. The first bearing 326 has a first bearing outer diameter DBO1, in a plane perpendicular to the pivot axis 314, that is greater than the first slot width W1, but less than the first opening diameter DO1. The first bearing 326 has a first bearing inner diameter DBI1 that is sized to hold the first trunnion 310. The first bearing outer diameter DBO1 and inner diameter DBI1 preferably are selected to closely fit the first opening 318 and first trunnion 310 to provide limited or no movement in a plane perpendicular to the pivot axis 314 when the first bearing 326 is fully installed in its interposed position between the first trunnion 310 and the first opening 318.

Similarly, A second bearing 328 is interposed between the second opening 320 and the second trunnion 312. The second bearing 328 has a second bearing outer diameter DBO2, in a plane perpendicular to the pivot axis 314, that is greater than the second slot width W2, but less than the second opening diameter DO2. The second bearing 328 has a second bearing inner diameter DBI2 that is sized to hold the second trunnion 312. The second bearing outer diameter DBO2 and inner diameter DBI2 preferably are selected to closely fit the second opening 320 and second trunnion 312 to provide limited or no movement in a plane perpendicular to the pivot axis 314 when the second bearing 328 is fully installed in its interposed position between the second trunnion 312 and the second opening 320.

The first and second bearings 326, 328 preferably each comprises a rotating support, such as a bushing, a roller bearing, or a ball bearing. Thus, the first and second bearings 326, 328 allow the first and second trunnions 310, 312, and thus the actuator body 300, to rotate relative to the frame 302 as the actuator operates.

It will be apparent from the foregoing description that the first and second bearings 326, 328 rotatably support the actuator body 300 on the frame 302, and also prevent the first and second trunnions 310, 312 from moving out of the first and second openings 318, 322, respectively. Specifically, the bearings' outer diameters DBO1, DBO2 are sized to hold them securely in the first and second openings 318, 320, and prevent them from passing through the first and second slots 322, 324.

The first and second bearings 326, 328 may be held in their respective interposed positions using any suitable fasteners or arrangements of parts. In the shown example, a first retainer 330 is located at a distal end of the first trunnion 310 and positioned to hold the first bearing 326 on the first trunnion 310. The first retainer 330 may comprise, for example, a washer or plate that is secured to the distal end of the first trunnion 310 by a first threaded fastener 332, such as a screw, bolt, or the like. Similarly, a second retainer 334 is located at a distal end of the second trunnion 312 and positioned to hold the second bearing 328 on the second trunnion 312. The second retainer 334 may comprise, for example, a plate or washer that is secured to the distal end of the second trunnion 312 by a second fastener 336, such as a screw, bolt, cotter pin, spring clip, snap ring, or the like. It will be appreciated that the actuator body 300 and frame 302 can be configured such that the first and second fasteners 332, 336 do not bear any operating loads. For example, the collar 316 may be sized, relative to the lateral distance L, to prevent the actuator body 300 from moving in the lateral direction far enough to allow either retainer 330, 334 to contact the frame 302. Thus, the fasteners 332, 336 can be made relatively inexpensively, and installed using regular tools. It will also be appreciated that the retainers 330, 334 may be secured to the frame 302, rather than the trunnions 310, 312. For example, the retainers 330, 334 may comprise plates that are screwed to the frame 302 at locations where the plates prevent the bearings 326, 328 from sliding off the trunnions 310, 312. Other alternatives and variations will be apparent to persons of ordinary skill in the art in view of the present disclosure.

Embodiments are expected to provide greater ease and cost savings with regard to manufacture and assembly of a trunnion connection and the underlying frame 302. For example, in the foregoing embodiment, the frame 302 may be formed by a pair of simple flat metal plates (such as shown) having the first and second openings and slots formed therein. Unlike trunnion mounts that use conventional pillow blocks, this avoids the need to provide threaded hard points for mounting the pillow blocks, and avoids the resulting dependency on the pillow block's connection to the frame to ultimately bear some of all of the operating loads of the actuator. The flat plate frame members can be constructed to receive the actuator using conventional and relatively inexpensive means, such as machining or laser cutting the slots and openings. Furthermore, assembly is simplified by allowing the assembler to slide the actuator body 300 along the slots 322, 324 until the trunnions 310, 312 are in the openings 318, 320, and then install the bearings 326, 328 to their respective interposed positions from the open sides of the frame 302. Thus, the installation can be performed with relative ease. Other benefits will become apparent with implementation of embodiments in practice.

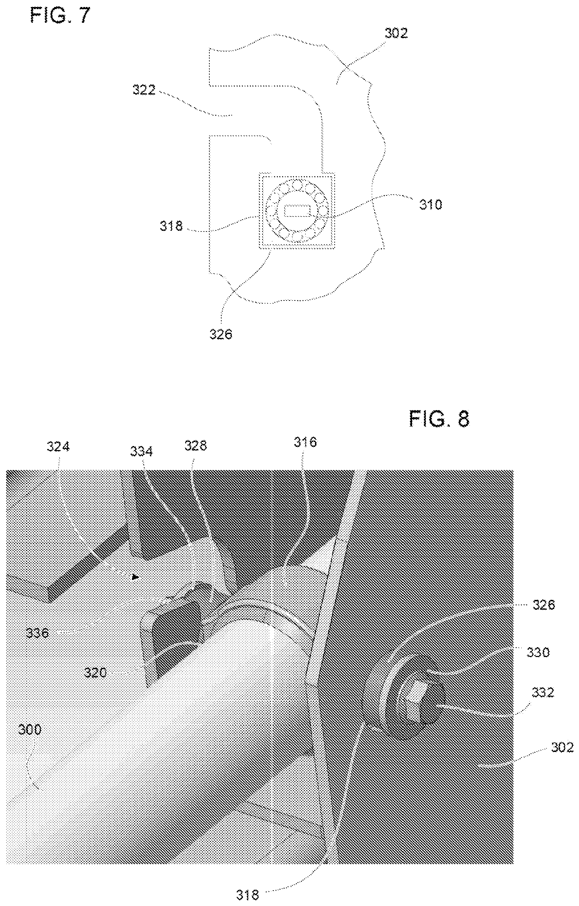

FIG. 7 shows another example a trunnion connection that may be used in other embodiments. In this case, the trunnion 310 has a non-circular shape, such as a rectangular shape, and the bearing 326 and opening 318 have matching non-circular shapes. As before, the bearing 326 is sized to fit within the opening 318, but will not pass through the slot 322. In this case, the bearing 326 also comprises a roller or ball bearing 700, rather than a simple bushing as in the previous example.

FIG. 8 shows another example of a trunnion connection that may be used in other embodiments. In this case the actuator body 300, trunnions 310, 312 and bearings 326, 328 are the same as in the first example, but the frame 302 is modified by making the first opening 318 a closed opening that lacks a slot connecting it to the surrounding area around the frame 302. However, the second opening 320 is connected to the surrounding area by the second slot 324. In this case, the assembler can install the actuator body 300 to the frame 302 by tilting the actuator body 300 about the longitudinal axis while sliding the second trunnion 312 along the second slot 324 to located the first trunnion 310 next to the first opening 318, and, as the second trunnion 312 enters the second opening 320, tilting the actuator body 300 to insert the first trunnion 310 into the first opening 318. Thus, the benefits of the use of a slotted opening can be obtained without necessarily mounting both trunnions in an opening that is connected by a slot to a location outside the frame. Other alternatives and variations will be apparent to persons of ordinary skill in the art in view of the present disclosure.

The embodiments described herein are all exemplary, and are not intended to limit the scope of the claims. It will also be appreciated that the inventions described herein can be modified and adapted in various ways within the scope of the appended claims.

## Claims

1. An agricultural vehicle header (112) comprising a header frame (302) mountable to a chassis (102) of an agricultural vehicle (100), a reel (116) movably mounted to the header frame (302) and configured to move crop material towards the chassis (102), wherein the agricultural vehicle header (112) further comprises a trunnion-mounted cylinder actuator assembly configured to move the reel (116) relative to the header (112), the trunnion-mounted cylinder actuator assembly comprising:
an actuator body (300) extending along a longitudinal direction (304) and having a first lateral side (306) and a second lateral side (308) that is opposite the first lateral side (306) with respect to the longitudinal direction;
a first trunnion (310), having a first diameter (DT1), extending perpendicular to the longitudinal direction from the first lateral side (306);
a second trunnion (312), having a second diameter (DT2), extending perpendicular to the longitudinal direction from the second lateral side (308) and collinearly with the first trunnion (310);
the header frame (302) comprising:
a first opening (318) sized to receive the first trunnion (310) therein,
a second opening (320) spaced from the first opening (318) and sized to receive the second trunnion (312) therein;
a first bearing (326) interposed between the first opening (318) and the first trunnion (310); and
a second bearing (328) interposed between the second opening (320) and the second trunnion (312);
a first slot (322) extending from outside the frame (302) to the first opening (318) and having a first slot width (W1) that is greater than the first diameter (DT1); and
wherein the first bearing (326) has a first bearing width (DBO1), in a plane of the first slot (322), that is greater than the first slot width (W1).

2. The agricultural vehicle header (112) of claim 1, wherein the actuator body (300) comprises a hydraulic actuator cylinder.

3. The agricultural vehicle header (112) of claim 1, wherein each of the first bearing (326) and the second bearing (328) comprises a respective bushing, a roller bearing or a ball bearing.

4. The agricultural vehicle header (112) of claim 1, further comprising a first retainer (330) located at a distal end of the first trunnion (310) and positioned to hold the first bearing (326) on the first trunnion (310).

5. The agricultural vehicle header (112) of claim 4, wherein the first retainer (330) comprises a washer secured to the distal end of the first trunnion (310).

6. The agricultural vehicle header (112) of claim 1, wherein the frame (302) further comprises a second slot (324) extending from outside the frame (302) to the second opening (320) and having a second slot width (W2) that is greater than the second diameter, and the second bearing (328) has a second bearing width (DBO2), in a plane of the second slot (324), that is greater than the second slot width.

7. The agricultural vehicle header (112) of claim 6, wherein the frame (302) comprises a first flat plate having the first opening (318) and the first slot (322) therein, and a second flat plate having the second opening (320) and the second slot (324) therein.

8. The agricultural vehicle header (112) of claim 6, further comprising a first retainer located (330) at a distal end of the first trunnion (310) and positioned to hold the first bearing (326) on the first trunnion (310), and a second retainer (334) located at a distal end of the second trunnion (312) and positioned to hold the second bearing (328) on the second trunnion (312).

9. The agricultural vehicle header (112) of claim 8, wherein the first retainer (330) comprises a first washer secured to the distal end of the first trunnion (310), and the second retainer (334) comprises a second washer secured to the distal end of the second trunnion (312).

10. The agricultural vehicle header (112) of claim 1, wherein the actuator body (300) comprises an agricultural header reel actuator.

11. The agricultural vehicle header (112) of claim 1, wherein the first opening (318) has a semi-circular inner perimeter, and the first bearing (326) has a circular outer perimeter.

12. An agricultural vehicle (100) comprising the agricultural vehicle header (112) according to any of claims 1-11

## Patentansprüche

1. Ein landwirtschaftlicher Fahrzeugvorsatz (112), umfassend einen Vorsatzrahmen (302), der an einem Fahrgestell (102) eines landwirtschaftlichen Fahrzeugs (100) montierbar ist, eine Haspel (116), die beweglich an dem Vorsatzrahmen (302) montiert ist und dazu konfiguriert ist, Erntegut in Richtung des Fahrgestells (102) zu bewegen, worin der landwirtschaftliche Fahrzeugvorsatz (112) ferner eine zapfengelagerte Zylinderaktuatorbaugruppe umfasst, die dazu konfiguriert ist, die Haspel (116) relativ zu dem Vorsatz (112) zu bewegen, wobei die zapfengelagerte Zylinderaktuatorbaugruppe umfasst:
einen Aktuatorkörper (300), der sich entlang einer Längsrichtung (304) erstreckt und eine erste Lateralseite (306) und eine zweite Lateralseite (308) aufweist, die der ersten Lateralseite (306) bezüglich der Längsrichtung gegenüberliegt;
einen ersten Zapfen (310), der einen ersten Durchmesser (DT1) aufweist und sich senkrecht zur Längsrichtung von der ersten Seitenfläche (306) erstreckt;
einen zweiten Zapfen (312), der einen zweiten Durchmesser (DT2) aufweist und sich senkrecht zur Längsrichtung von der zweiten Seitenfläche (308) und kollinear mit dem ersten Zapfen (310) erstreckt;
den Vorsatzrahmen (302) umfassend:
eine erste Öffnung (318), die bemessen ist, um den ersten Zapfen (310) darin aufzunehmen,
eine zweite Öffnung (320), die von der ersten Öffnung (318) beabstandet und dimensioniert ist, um den zweiten Zapfen (312) darin aufzunehmen;
ein erstes Lager (326), das zwischen der ersten Öffnung (318) und dem ersten Zapfen (310) angeordnet ist; und
ein zweites Lager (328), das zwischen der zweiten Öffnung (320) und dem zweiten Zapfen (312) angeordnet ist;
einen ersten Schlitz (322), der sich von außerhalb des Rahmens (302) zu der ersten Öffnung (318) erstreckt und eine erste Schlitzbreite (W1) aufweist, die größer als der erste Durchmesser (DT1) ist; und
worin das erste Lager (326) eine erste Lagerbreite (DBO1) in einer Ebene des ersten Schlitzes (322) aufweist, die größer ist als die erste Schlitzbreite (W1).

2. Landwirtschaftlicher Fahrzeugvorsatz (112) für landwirtschaftliche Fahrzeuge nach Anspruch 1, worin der Stellantriebskörper (300) einen hydraulischen Stellantriebszylinder umfasst.

3. Landwirtschaftlicher Fahrzeugvorsatz (112) nach Anspruch 1, worin jedes des ersten Lagers (326) und des zweiten Lagers (328) eine jeweilige Buchse, ein Rollenlager oder ein Kugellager umfasst.

4. Landwirtschaftlicher Fahrzeugvorsatz (112) nach Anspruch 1, ferner umfassend einen ersten Halter (330), der an einem distalen Ende des ersten Zapfens (310) angeordnet und positioniert ist, um das erste Lager (326) auf dem ersten Zapfen (310) zu halten.

5. Landwirtschaftlicher Fahrzeugvorsatz (112) für landwirtschaftliche Fahrzeuge nach Anspruch 4, worin der erste Halter (330) eine Unterlegscheibe umfasst, die am distalen Ende des ersten Zapfens (310) befestigt ist.

6. Landwirtschaftlicher Fahrzeugvorsatz (112) nach Anspruch 1, worin der Rahmen (302) ferner einen zweiten Schlitz (324) umfasst, der sich von außerhalb des Rahmens (302) zu der zweiten Öffnung (320) erstreckt und eine zweite Schlitzbreite (W2) aufweist, die größer als der zweite Durchmesser ist, und das zweite Lager (328) eine zweite Lagerbreite (DBO2) in einer Ebene des zweiten Schlitzes (324) aufweist, die größer als die zweite Schlitzbreite ist.

7. Landwirtschaftlicher Fahrzeugvorsatz (112) nach Anspruch 6, worin der Rahmen (302) eine erste flache Platte mit der ersten Öffnung (318) und dem ersten Schlitz (322) darin und eine zweite flache Platte mit der zweiten Öffnung (320) und dem zweiten Schlitz (324) darin umfasst.

8. Landwirtschaftlicher Fahrzeugvorsatz (112) nach Anspruch 6, ferner umfassend einen ersten Halter (330), der an einem distalen Ende des ersten Zapfens (310) angeordnet und positioniert ist, um das erste Lager (326) auf dem ersten Zapfen (310) zu halten, und einen zweiten Halter (334), der an einem distalen Ende des zweiten Zapfens (312) angeordnet und positioniert ist, um das zweite Lager (328) auf dem zweiten Zapfen (312) zu halten.

9. Landwirtschaftlicher Fahrzeugvorsatz (112) nach Anspruch 8, worin die erste Halterung (330) eine erste Unterlegscheibe umfasst, die am distalen Ende des ersten Zapfens (310) befestigt ist, und die zweite Halterung (334) eine zweite Unterlegscheibe umfasst, die am distalen Ende des zweiten Zapfens (312) befestigt ist.

10. Landwirtschaftlicher Fahrzeugvorsatz (112) nach Anspruch 1, worin der Aktuatorkörper (300) einen Haspelaktuator für landwirtschaftliche Erntevorsätze umfasst.

11. Landwirtschaftlicher Fahrzeugvorsatz (112) nach Anspruch 1, worin die erste Öffnung (318) einen halbkreisförmigen Innenumfang aufweist und das erste Lager (326) einen kreisförmigen Außenumfang aufweist.

12. Ein landwirtschaftliches Fahrzeug (100), umfassend den landwirtschaftlichen Fahrzeugvorsatz (112) nach einem der Ansprüche 1-11.

## Revendications

1. Unité de récolte (112) de véhicule agricole comprenant un cadre d'unité de récolte (302) pouvant être monté sur un châssis (102) d'un véhicule agricole (100), un rabatteur (116) monté de manière mobile sur le cadre d'unité de récolte (302) et conçu pour déplacer un produit de récoltes vers le châssis (102), dans laquelle l'unité de récolte (112) de véhicule agricole comprend en outre un ensemble actionneur de cylindre monté sur tourillon conçu pour déplacer le rabatteur (116) par rapport à l'unité de récolte (112), l'ensemble actionneur de cylindre monté sur tourillon comprenant :
un corps d'actionneur (300) s'étendant le long d'une direction longitudinale (304) et ayant un premier côté latéral (306) et un second côté latéral (308) qui est opposé au premier côté latéral (306) par rapport à la direction longitudinale ;
un premier tourillon (310), ayant un premier diamètre (DT1), s'étendant perpendiculairement à la direction longitudinale à partir du premier côté latéral (306) ;
un second tourillon (312), ayant un second diamètre (DT2), s'étendant perpendiculairement à la direction longitudinale à partir du second côté latéral (308) et de manière colinéaire avec le premier tourillon (310) ;
le cadre d'unité de récolte (302) comprenant :
une première ouverture (318) dimensionnée pour recevoir le premier tourillon (310) en son sein,
une seconde ouverture (320) espacée de la première ouverture (318) et dimensionnée pour recevoir le second tourillon (312) en son sein ;
un premier palier (326) interposé entre la première ouverture (318) et le premier tourillon (310) ; et
un second palier (328) interposé entre la seconde ouverture (320) et le second tourillon (312) ;
une première fente (322) s'étendant de l'extérieur du cadre (302) à la première ouverture (318) et ayant une première largeur de fente (W1) qui est supérieure au premier diamètre (DT1) ; et
dans laquelle le premier palier (326) a une première largeur de palier (DBO1), dans un plan de la première fente (322), qui est supérieure à la première largeur de fente (W1).

2. Unité de récolte (112) de véhicule agricole selon la revendication 1, dans laquelle le corps d'actionneur (300) comprend un cylindre d'actionneur hydraulique.

3. Unité de récolte (112) de véhicule agricole selon la revendication 1, dans laquelle chacun du premier palier (326) et du second palier (328) comprend une bague respective, un roulement à rouleaux ou un roulement à billes.

4. Unité de récolte (112) de véhicule agricole selon la revendication 1, comprenant en outre un premier dispositif de retenue (330) situé au niveau d'une extrémité distale du premier tourillon (310) et positionné pour maintenir le premier palier (326) sur le premier tourillon (310).

5. Unité de récolte (112) de véhicule agricole selon la revendication 4, dans laquelle le premier dispositif de retenue (330) comprend une rondelle fixée à l'extrémité distale du premier tourillon (310).

6. Unité de récolte (112) de véhicule agricole selon la revendication 1, dans laquelle le cadre (302) comprend en outre une seconde fente (324) s'étendant de l'extérieur du cadre (302) à la seconde ouverture (320) et ayant une seconde largeur de fente (W2) qui est supérieure au second diamètre, et le second palier (328) a une seconde largeur de palier (DBO2), dans un plan de la seconde fente (324), qui est supérieure à la seconde largeur de fente.

7. Unité de récolte (112) de véhicule agricole selon la revendication 6, dans laquelle le cadre (302) comprend une première plaque plate ayant la première ouverture (318) et la première fente (322) en son sein, et une seconde plaque plate ayant la seconde ouverture (320) et la seconde fente (324) en son sein.

8. Unité de récolte (112) de véhicule agricole selon la revendication 6, comprenant en outre un premier dispositif de retenue (330) situé au niveau d'une extrémité distale du premier tourillon (310) et positionné pour maintenir le premier palier (326) sur le premier tourillon (310), et un second dispositif de retenue (334) situé au niveau d'une extrémité distale du second tourillon (312) et positionné pour maintenir le second palier (328) sur le second tourillon (312).

9. Unité de récolte (112) de véhicule agricole selon la revendication 8, dans laquelle le premier dispositif de retenue (330) comprend une première rondelle fixée à l'extrémité distale du premier tourillon (310), et le second dispositif de retenue (334) comprend une seconde rondelle fixée à l'extrémité distale du second tourillon (312).

10. Unité de récolte (112) de véhicule agricole selon la revendication 1, dans laquelle le corps d'actionneur (300) comprend un actionneur de rabatteur d'unité de récolte agricole.

11. Unité de récolte (112) de véhicule agricole selon la revendication 1, dans laquelle la première ouverture (318) a un périmètre interne semi-circulaire, et le premier palier (326) a un périmètre externe circulaire.

12. Véhicule agricole (100) comprenant l'unité de récolte (112) de véhicule agricole selon l'une quelconque des revendications 1 à 11.
